# EUROPÄISCHE PATENTSCHRIFT

(11) **EP 3 090 909 B1**
(45) Veröffentlichungstag und Bekanntmachung des Hinweises auf die Patenterteilung: **07.08.2019**
(21) Anmeldenummer: 15166216.0
(22) Anmeldetag: 04.05.2015
(51) Int. Cl.: B60T 17/04

(54) **FLUIDISCHER ANSCHLUSSSTECKER**
FLUIDIC CONNECTOR PLUG
FICHE DE RACCORDEMENT FLUIDIQUE

(43) Veröffentlichungstag der Anmeldung: 09.11.2016
(73) Patentinhaber: Haldex Brake Products Aktiebolag, 261 24 Landskrona (SE)
(72) Erfinder: Becke, Stefan, 68804 Altlussheim (DE); Tschöke, Tobias, 69121 Heidelberg (DE)
(74) Vertreter: REHBERG HÜPPE + PARTNER

(56) Entgegenhaltungen:
- EP-A1- 1 878 962
- EP-A2- 0 132 673
- WO-A1-2010/006838
- DE-A1- 4 019 408

## Beschreibung

### TECHNISCHES GEBIET DER ERFINDUNG

Die Erfindung betrifft einen fluidischen Anschlussstecker, welcher dem fluiddichten Verbinden einer rohr- oder schlauchartigen Leitung mit einem beispielsweise in einem Gehäuse vorgesehenen Anschluss dient. Insbesondere findet der fluidische Anschlussstecker Einsatz für eine Druckluftanlage eines Nutzfahrzeugs, um eine pneumatisch dichte Verbindung zwischen einer Leitung und einem Gehäuse eines pneumatischen Bauelements der Druckluftanlage herzustellen.

### STAND DER TECHNIK

Die Druckschrift EP 0 132 673 A2 offenbart einen fluidischen Anschlussstecker zur Verbindung einer Rohrleitung mit einem Gehäuse eines Ventils. Der Anschlussstecker weist hierbei eine Überwurfschraube auf, die ein Außengewinde aufweist, mit dem die Überwurfschraube einschraubbar ist in ein Innengewinde eines Anschlusses des Gehäuses. Die Überwurfschraube verfügt über eine Durchgangsbohrung, in welche ein hülsenartiges Innenteil einsetzbar ist. In eingesetztem Zustand ist das Innenteil in der Überwurfschraube durch einen von der Überwurfschraube gehaltenen Haltering axial fixiert, der radial nach innen orientierte elastische erste Haltezungen und zweite Haltezungen ausbildet. Die Haltezungen sind verrastet in einer Umfangsnut des Innenteils und sichern jeweils das Innenteil in der Überwurfschraube in eine axiale Richtung. Das Innenteil bildet in dem frei aus der Überwurfschraube auskragenden Endbereich einen Anschlussdorn aus, auf den eine Rohrleitung aufschiebbar ist.

Die Druckschrift EP 1 878 962 A1, die den nächstliegenden Stand der Technik bildet, offenbart einen Push-To-Connect-Anschlussstecker, welcher mit einem Innenteil sowie einem Außenteil gebildet ist. Das Innenteil verfügt über ein Innenrohr, welches in montiertem Zustand im Inneren der Rohrleitung angeordnet ist, sowie eine das Innenrohr tragende Hülse, welche in montiertem Zustand die Rohrleitung außen umgibt. Die Hülse verfügt über radial nach innen beaufschlagte Klemmnasen, welche an die Mantelfläche der Rohrleitung gepresst werden, um die Rohrleitung in axialer Richtung gegenüber dem Innenteil zu sichern. Das ebenfalls hülsenartige Außenteil verfügt über ein innenliegendes Halteelement in Form einer Verjüngung, welche bei auf die Rohrleitung und das Innenteil wirkenden Zugkräften mit den Klemmnasen in Wechselwirkung tritt, um einerseits die Fixierung der Rohrleitung in dem Innenteil zu stärken und andererseits einen Austritt des Innenteils aus dem Außenteil zu unterbinden. Die Außenfläche des Außenteils ist mit einer Presspassung eingesetzt in einen Anschluss eines Gehäuses einer Bremse oder eines Niveauregelventils. Die Außenfläche des Außenteils ist hierbei mit Zähnen ausgestattet, welche in in den Anschluss des Gehäuses eingesetztem Zustand eine Art Verzahnung mit der Innenfläche des Anschlusses ausbilden.

Weiterer Stand der Technik ist aus den Druckschriften DE 40 19 408 A1 und WO 2010/006838 A1 bekannt.

### AUFGABE DER ERFINDUNG

Der Erfindung liegt die Aufgabe zugrunde, einen fluidischen Anschlussstecker vorzuschlagen, welcher insbesondere hinsichtlich
- einer einfachen Montage,
- einer Sicherung der fluiddichten Verbindung auch bei auf die Leitung wirkenden Zugkräften,
- der Baugröße und/oder
- des Möglichkeiten für einen Einsatz von Kunststoff für die Bauelemente des Anschlusssteckers und/oder der Leitung
verbessert ist.

Des Weiteren liegt der Erfindung die Aufgabe zugrunde, ein verbessertes Verfahren zur Nutzung, insbesondere Montage und Demontage, eines derartigen fluidischen Anschlusssteckers mit dem Anschluss und/oder der Leitung bereitzustellen.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Der erfindungsgemäße fluidische Anschlussstecker findet Einsatz zum fluidischen, insbesondere pneumatischen, nach außen abgedichteten Verbinden einer rohr- oder schlauchartigen Leitung mit einem Anschluss. Vorzugsweise findet der erfindungsgemäße fluidische Anschlussstecker Einsatz für eine Druckluftanlage eines Nutzfahrzeugs, beispielsweise zum Verbinden einer Leitung mit einem Anschluss eines pneumatischen Bauelements.

Der erfindungsgemäße fluidische Anschlussstecker ist mehrteilig ausgebildet:
Der fluidische Anschlussstecker verfügt über ein Innenteil. Das Innenteil besitzt eine durchgängige Ausnehmung. In der durchgängigen Ausnehmung ist die Leitung aufgenommen. Je nach Länge der durchgängigen Ausnehmung und Abstand oder der Erstreckung der Abstützstellen der Leitung in der Ausnehmung des Innenteils kann durch das Innenteil auch die Aufnahme von beanspruchenden Momenten, welche um eine Achse wirken, welche quer zur Längsachse der Leitung orientiert ist, erfolgen. Das Innenteil besitzt ein Halteelement. Das Halteelement sichert die Leitung in dem Innenteil. Hierbei sind vielfältige unterschiedliche Ausgestaltungen des Halteelements möglich. Für eine Ausgestaltung ist das Halteelement mit mindestens einem Einformelement in Form eines Vorsprungs, einer Schneide u. ä. ausgebildet, welche in die Mantelfläche der Leitung eingeformt wird. Alternativ oder kumulativ möglich ist, dass das Halteelement als eine Art Reibelement ausgebildet ist, welches zwecks Bildung eines Reibkontakts an die Mantelfläche der Leitung gepresst wird. Möglich ist eine formschlüssige und/oder reibschlüssige Sicherung der Leitung in dem Innenteil über das Haltelement.

Des Weiteren verfügt der Anschlussstecker über ein Außenteil. In dem Außenteil ist das Innenteil aufgenommen. Das Außenteil ist in den Anschluss einsetzbar.

Das Halteelement ist radial beaufschlagt, was zur Ausbildung des Reibkontakts, zu dem Einformen des Einformelements, der reibschlüssigen und/oder der formschlüssigen Sicherung führt.

Diese Beaufschlagung des Halteelements erfolgt über ein Beaufschlagungselement des Außenteils. Hierbei kann die Beaufschlagung in der montierten Stellung des Anschlusssteckers permanent erfolgen. Vorzugsweise erfolgt diese Beaufschlagung aber nur oder in vergrößertem Ausmaß während des Einführens des Innenteils in das Außenteil und/oder mit Aufbringung von Entnahmekräften auf die Leitung, welche dann durch Übertragung durch das Halteelement auch auf das Innenteil wirken. Mit der Beaufschlagung des Beaufschlagungselements erfolgt erfindungsgemäß eine Verstärkung der Sicherung der Leitung in dem Innenteil.

Erfindungsgemäß findet ein Sicherungselement Verwendung, welches separat von dem Innenteil und dem Außenteil ausgebildet ist. Das Sicherungselement sichert das Außenteil in einem in den Anschluss eingesetzten montiertem Zustand mit einer Sicherungskraft gegenüber einer Entnahme aus dem Anschluss, wenn auf die Leitung im Betrieb Zugkräfte wirken.

Im Rahmen der Erfindung wird angestrebt, dass die Montage des Außenteils (u. U. mit diesem auch des Innenteils oder das Innenteil mit bereits darin angeordneter Leitung) möglichst einfach mit geringen Montagekräften erfolgen soll, während dennoch eine große maximale Sicherungskraft herbeiführbar sein soll, welche auf die Leitung, das Innenteil und/oder das Außenteil wirkenden Kräften in Entnahmerichtung entgegenwirken soll. Erfindungsgemäß ist das Sicherungselement mit einer Einführkraft in den Anschluss einsetzbar, welche eine Größenordnung (insbesondere mehr als um einen Faktor 5 oder 10 oder sogar mehr als 20) kleiner ist als die maximale Sicherungskraft gegenüber einer Entnahme aus dem Anschluss.

Grundsätzlich gibt es für die Ausgestaltung des Sicherungselements vielfältige Möglichkeiten. Beispielsweise kann ein Sicherungselement in einem begrenzten Umfangsbereich des Außenteils vorgesehen sein, wobei auch möglich ist, dass mehrere derartige Sicherungselemente um den Umfang des Außenteils verteilt angeordnet sind. In bevorzugter Ausgestaltung ist das Sicherungselement als Sicherungsring ausgebildet. Ein derartiger Sicherungsring kann auf besonders einfache Weise und montagesicher mit dem Außenteil verbunden werden, indem der Sicherungsring über die Mantelfläche des Außenteils geschoben wird. Möglich ist, dass der Sicherungsring mehrere über den Umfang verteilte Sicherungskomponenten aufweist, deren Lage und Verteilung in Umfangsrichtung durch den Sicherungsring vorgegeben ist.

Für das Material eines Sicherungselements oder des Sicherungsrings gibt es vielfältige Möglichkeiten. Vorzugseise ist das Sicherungselement oder ist der Sicherungsring aus Kunststoff hergestellt oder aus einem metallischen Material hergestellt.

Für eine erste und zweite Variante der Erfindung ist das Sicherungselement mit mindestens einer radial nachgiebigen Federzunge ausgebildet. Für die Ausgestaltung des Sicherungselements als Sicherungsring können in dem Sicherungsring mehrere über den Umfang verteilte radial nachgiebige Federzungen bereitgestellt werden. Die mindestens eine Federzunge dient der Bereitstellung der (maximalen) Sicherungskraft, wobei zu diesem Zweck die Federzunge unter Nutzung der radialen Nachgiebigkeit über eine Verriegelung, Rastierung, einen Reibschluss oder einen Formschluss in Wechselwirkung mit den benachbarten Bauelementen, nämlich dem Außenteil und/oder dem Anschluss, in Wechselwirkung treten kann und hierbei einen Formschluss oder einen Reibschluss herbeiführen kann. Möglich ist, dass das Sicherungselement über mindestens zwei unterschiedliche Federzungen verfügt, wobei mindestens eine erste Federzunge einer Fixierung des Sicherungselements an dem Außenteil dient und mindestens eine zweite Federzunge dem Fixieren des Sicherungselements in dem Anschluss dient. Beispielsweise können diese unterschiedlichen Federzungen eine Erstreckung in entgegengesetzte axiale Richtungen des Sicherungselements besitzen, wobei die erste Federzunge radial nach innen orientiert sein kann mit elastischer Beaufschlagung der Federzunge nach außen mit Herbeiführung der Wirkverbindung zwischen Außenteil und Sicherungselement und die zweite Federzunge radial nach außen abgewinkelt sein kann mit elastischer Beaufschlagung radial nach innen mit Herbeiführung der Wechselwirkung zwischen Sicherungselement und Anschluss.

Für die erste Variante der Erfindung bildet das Sicherungselement mit dem Anschluss eine Rastverbindung aus. Eine Federzunge, welche der Sicherung oder Verrastung des Sicherungselements mit dem Anschluss dient, ist gegenüber der Einführrichtung mit einem überstumpfen Winkel geneigt. Der Anschluss besitzt eine Hinterschneidung. Die erläuterte Rastverbindung zwischen dem Sicherungselement und dem Anschluss ist gebildet mit dem Eintritt der Federzunge in die Hinterschneidung. Für diese Ausführungsform kann eine Gewährleistung, dass das Sicherungselement mit Einführkräften in den Anschluss einsetzbar ist, welche mindestens eine Größenordnung kleiner sind als die maximale Sicherungskraft gegenüber einer Entnahme aus dem Anschluss, dadurch erfolgen, dass angesichts der Neigung der Federzunge gegenüber der Einführrichtung mit einem überstumpfen Winkel während des Einführens des Sicherungselements in den Anschluss und vor dem Eintritt der Federzungen in die Hinterschneidung die Federzungen auf Biegung und/oder infolge einer Reibkraft zwischen der Federzunge und dem Anschluss auf Zug beansprucht ist. Eine derartige Einführung des Sicherungselements führt somit zu einer kleinen, dem Einführen entgegen gerichteten Kraft, welche durch die manuell aufgebrachte Einführkraft zu überwinden sind. Hingegen wird bei auf die Leitung wirkenden Zugkräften die Federzunge mit einer Stirnseite gegen eine von der Hinterschneidung ausgebildete Rastfläche gepresst. Die Federzunge wird in diesem Fall mit einer Druckkraft beansprucht, welche auch in einer Art Knick-Beanspruchung der Federzungen bestehen kann. Somit "verhakt" die Federzunge bei auf die Leitung wirkenden Zugkräften mit der von der Hinterschneidung ausgebildeten Rastfläche, womit eine maximale Sicherungskraft herbeiführbar ist, welche um mindestens eine Größenordnung größer ist als die erforderliche Einführkraft.

Das Entsprechende gilt für eine etwaige Federzunge, welche der Sicherung des Sicherungselements gegenüber dem Außenteil dient: In diesem Fall kann die Federzunge gegenüber der Entnahmerichtung mit einem überstumpfen Winkel geneigt sein und mit einer Hinterschneidung oder Rastnut des Außenteils in Wechselwirkung treten.

Die erhöhte maximale Sicherheitskraft gegenüber einer Entnahme kann für die zweite Variante der Erfindung herbeigeführt werden, indem ein Freiheitsgrad der Federzunge radial nach innen, welcher während des Einführens des Sicherungselements in den Anschluss nutzbar ist, durch das darin oder darunter angeordnete Außenteil zumindest eingeschränkt ist. Anders gesagt kann damit die Federzunge mit dem Einführen des Sicherungselements in den Anschluss frei radial nach innen bewegt werden, womit zwischen Federzunge und Anschluss verhältnismäßig kleine Kräfte wirken. Hingegen wird dieser Freiheitsgrad der Federzunge radial nach innen durch die Innenhülse in montiertem Zustand zumindest eingeschränkt (oder sogar vollständig blockiert), so dass die Federzunge in montiertem Zustand nicht oder nur mit erhöhten Kräften radial nach innen ausweichen kann und somit eine Wechselwirkung zwischen der Federzunge und dem Anschluss gewährleistet ist, welche zu einer hohen maximalen Sicherungskraft führt. Ebenfalls möglich ist, dass durch die Innenhülse in montiertem Zustand die Federzunge radial nach außen beaufschlagt wird, womit somit die Anpresskraft der Federzunge radial nach außen in den Anschluss gestärkt wird und wiederum eine Erhöhung der maximalen Sicherungskraft herbeigeführt wird.

Für eine dritte Variante der Erfindung ist das Sicherungselement mit mindestens einer radial nachgiebigen Federzunge ausgebildet. Das Sicherungselement bildet mit dem Anschluss eine Rastverbindung aus, wobei dieses zusätzlich auch mit dem Außenteil eine Rastverbindung ausbilden kann. Eine derartige Rastverbindung ist auf besonders einfache Weise herstellbar. Durch Gestaltung der Rastverbindung, hier der Rastschrägen, Wahl der Länge und des Querschnittes eines Federarms eines Rastelements und Wahl der Steifigkeit eines Federarms des Rastelements, kann einerseits das Verhalten beim Einrasten und andererseits die Sicherungswirkung gegenüber einem Lösen der Rastverbindung konstruktiv vorgegeben werden. Andererseits gibt die Herstellung einer Rastverbindung dem Benutzer bei der bestimmungsgemäßen Herstellung der Rastverbindung unter Umständen eine haptische Rückmeldung, dass der fluidische Anschlussstecker korrekt montiert worden ist.

Ein weiterer Aspekt der Erfindung widmet sich der Verbindung zwischen Außenteil und Innenteil. Während hier grundsätzlich beliebige Verbindungsmöglichkeiten einsetzbar sind, schlägt die Erfindung in einer Ausgestaltung vor, dass das Außenteil ein Rastelement besitzt. Das Rastelement des Außenteils ist mit einem Gegen-Rastelement des Innenteils rastierbar. Über diese Rastierung zwischen Rastelement und Gegen-Rastelement erfolgt eine axiale Sicherung des Außenteils relativ zum Innenteil. Eine derartige Rastverbindung kann besonders einfach bereitgestellt werden, wobei auch hier über die Gestaltung der Rastverbindung die Sicherungswirkung und die Höhe der erforderlichen Montagekräfte konstruktiv vorgebbar sind.

Grundsätzlich möglich ist, dass das Beaufschlagungselement des Außenteils für das Halteelement einerseits und das Rastelement andererseits separat voneinander ausgebildet sind. Für einen besonderen Vorschlag der Erfindung bildet das Rastelement des Außenteils, über welches die Verbindung zwischen Außenteil und Innenteil gesichert ist, gleichzeitig das Beaufschlagungselement aus, welches das Halteelement zur Verstärkung der Sicherung der Leitung in dem Innenteil beaufschlagt. Hiermit ist das Rastelement multifunktional eingesetzt, womit sich eine besonders kompakte Bauweise ergeben kann. Unter Umständen kann diese multifunktionale Nutzung des Rastelements auch für eine vereinfachte Montage und/oder Demontage genutzt werden, da die Herbeiführung oder das Lösen der Rastierung zwischen Außenteil und Innenteil gleichzeitig genutzt werden kann für die Beaufschlagung des Halteelements, also auch die Herbeiführung oder Beseitigung der Sicherung der Leitung in dem Innenteil.

Eine Abdichtung der einzelnen Bauelemente des fluidischen Anschlusssteckers kann auf beliebige Weise erfolgen. In bevorzugter Ausgestaltung besitzt das Außenteil ein Dichtelement, welches bspw. als O-Ring ausgebildet sein kann. Dieses Dichtelement gewährleistet eine fluiddichte Abdichtung des Außenteils gegenüber dem Anschluss.

Durchaus möglich ist, dass die Leitung lediglich in dem Innenteil oder dem Außenteil geführt und/oder gehalten ist. Für einen weiteren erfindungsgemäßen fluidischen Anschlussstecker verfügen das Innenteil und das Außenteil über Ausnehmungen mit korrespondierenden Durchmessern, welche vorzugsweise als Spiel- oder Übergangspassung zu dem Außendurchmesser der Leitung ausgebildet sind. Für diese Ausgestaltung erstreckt sich die Leitung durch die Ausnehmung des Innenteils hindurch bis in die Ausnehmung des Außenteils. Dies hat zur Folge, dass eine Führung der Leitung sowohl in dem Innenteil als auch in dem Außenteil gewährleistet ist, wodurch sich beispielsweise eine vergrößerte Führungslänge ergeben kann, die insbesondere vorteilhaft ist hinsichtlich der Aufnahme von auf die Leitung wirkender Biegebeanspruchungen.

In bevorzugter Ausgestaltung ist bei diesem fluidischen Anschlussstecker mindestens ein Dichtelement axial zwischen der Ausnehmung des Außenteils und der Ausnehmung des Innenteils angeordnet. Hierbei wirkt das von dem Außenteil innenliegend getragene Dichtelement unmittelbar zwischen dem Außenteil und der Leitung.

Eine weitere Lösung der der Erfindung zugrunde liegenden Aufgabe ist gegeben durch ein Verfahren zur Nutzung eines fluidischen Anschlusssteckers, wie dieser zuvor beschrieben worden ist. Für ein derartiges Verfahren wird der Anschlussstecker in montiertem Zustand des Sicherungselements, des Außenteils und des Innenteils mit darin angeordneter Leitung in den Anschluss eingesetzt. Hierbei wird mit dem Einsetzen des Anschlusssteckers in den Anschluss des Sicherungselements mit der Hinterschneidung des Anschlusses verrastet. Somit muss der Monteur lediglich den montierten Anschlussstecker in einem einzigen Montageschritt in den Anschluss einsetzen, womit letztendlich die Verbindung der Leitung mit den dem Anschluss aufweisenden pneumatischen Bauelement hergestellt ist.

Für eine alternative Ausgestaltung wird hingegen zunächst das Sicherungselement in den Anschluss eingesetzt. Mit dem Einsetzen des Sicherungselements wird die Federzunge radial nach innen verformt. Hieran anschließend wird dann das Außenteil in den Anschluss eingesetzt, womit ein Freiheitsgrad der Federzunge radial nach innen zumindest eingeschränkt wird. Möglich ist aber auch, dass mit dem Einsetzen des Außenteils in den Anschluss die Federzunge durch das Außenteil radial nach außen beaufschlagt wird.

Für beide Ausgestaltungen des Verfahrens erfolgt in weiterer Ausgestaltung des Verfahrens bei der Aufbringung von Entnahmekräften eine radiale Beaufschlagung des Haltelements über ein Beaufschlagungselement des Außenteils, womit eine Verstärkung der Sicherung der Leitung in dem Innenteil erfolgt. Für eine erleichterte Entnahme der Leitung aus dem Innenteil ist ein axiales Fixieren oder axiales Hereindrücken des Innenteils in das Außenteil erforderlich. Mit einer derartigen Fixierung oder einem Hereindrücken ist eine (zusätzliche) Beaufschlagung des Halteelements durch das Beaufschlagungselement unmöglich gemacht.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Federzunge die Rede ist, ist dies so zu verstehen, dass genau eine Federzunge, zwei Federzungen oder mehr Federzungen vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt einen Anschlussstecker in einem Längsschnitt.
- **Fig. 2**: zeigt den Anschlussstecker gemäß Fig. 1 mit darin angeordneter Leitung in einem Längsschnitt, wobei der Anschlussstecker in einen Anschluss eines Gehäuses eingesetzt ist.
- **Fig. 3**: zeigt ein Innenteil des Anschlusssteckers gemäß Fig. 1 und 2 in räumlicher Darstellung.
- **Fig. 4**: zeigt ein Außenteil des Anschlusssteckers gemäß Fig. 1 und 2 in einer räumlichen Darstellung.
- **Fig. 5**: zeigt das als Sicherungsring ausgebildetes Sicherungselement eines Anschlusssteckers gemäß Fig. 1 und 2 in räumlicher Darstellung.
- **Fig. 6**: zeigt eine weitere Ausführungsform eines Anschlusssteckers in einem Längsschnitt.
- **Fig. 7**: zeigt den Anschlussstecker gemäß Fig. 6 mit darin angeordneter Leitung in einem Längsschnitt, wobei der Anschlussstecker in einen Anschluss eines Gehäuses eingesetzt ist.
- **Fig. 8**: zeigt ein Innenteil des Anschlusssteckers gemäß Fig. 6 und 7 in räumlicher Darstellung.
- **Fig. 9**: zeigt ein Außenteil des Anschlusssteckers gemäß Fig. 6 und 7 in räumlicher Darstellung.
- **Fig. 10**: zeigt ein als Sicherungsring ausgebildetes Sicherungselement des Anschlusssteckers gemäß Fig. 6 und 7 in räumlicher Darstellung.
- **Fig. 11**: zeigt eine alternative Ausgestaltung eines als Sicherungsring ausgebildeten Sicherungselements für den Anschlussstecker gemäß Fig. 6 und 7 in räumlicher Darstellung.
- **Fig. 12**: zeigt eine weitere Ausführungsform eines Anschlusssteckers in einem Längsschnitt.
- **Fig. 13**: zeigt den Anschlussstecker gemäß Fig. 12 mit darin angeordneter Leitung in einem Längsschnitt, wobei der Anschlussstecker in einen Anschluss eines Gehäuses eingesetzt ist.
- **Fig. 14**: zeigt ein Innenteil des Anschlusssteckers gemäß Fig. 12 und 13 in räumlicher Darstellung.
- **Fig. 15**: zeigt ein Außenteil des Anschlusssteckers gemäß Fig. 12 und 13 in räumlicher Darstellung.
- **Fig. 16**: zeigt ein als Sicherungsring ausgebildetes Sicherungselement für den Anschlussstecker gemäß Fig. 12 und 13 in räumlicher Darstellung.

### FIGURENBESCHREIBUNG

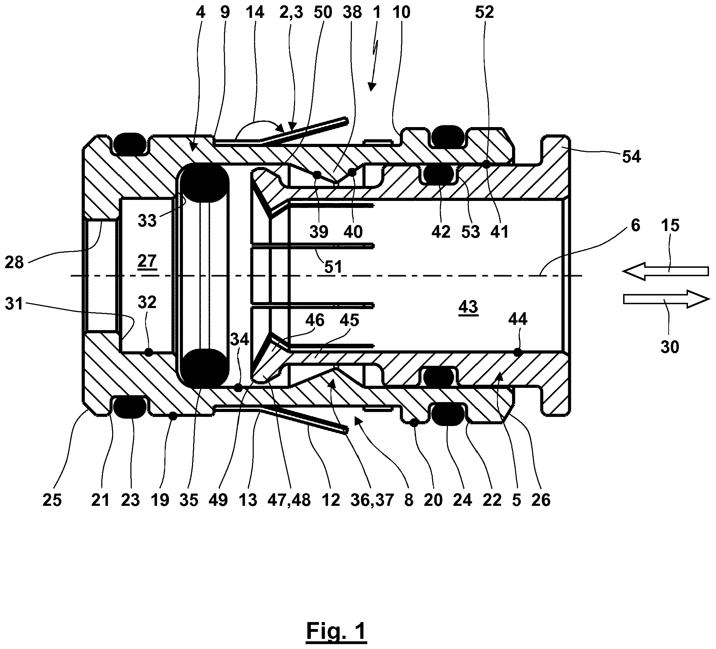

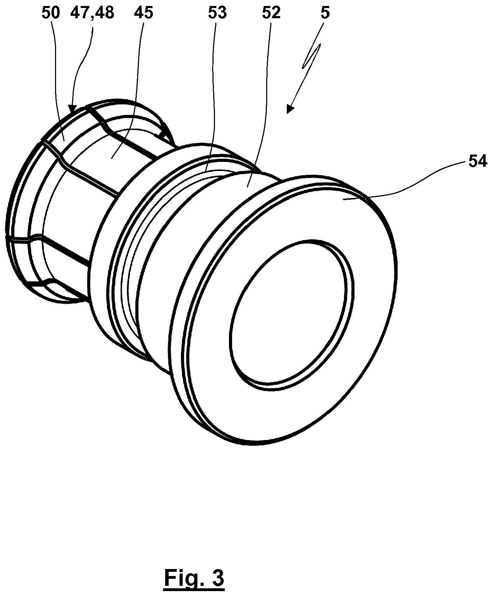

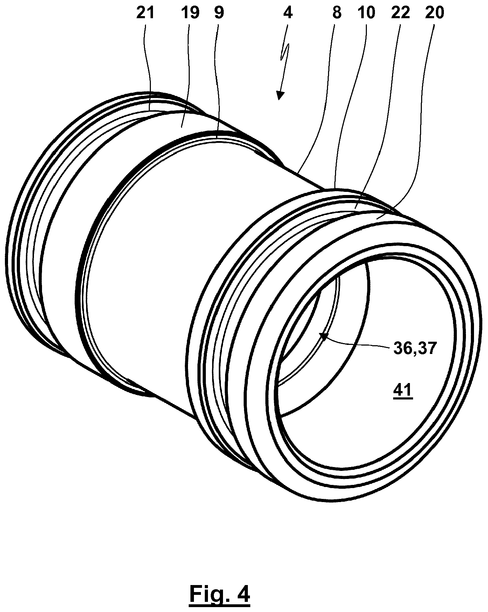

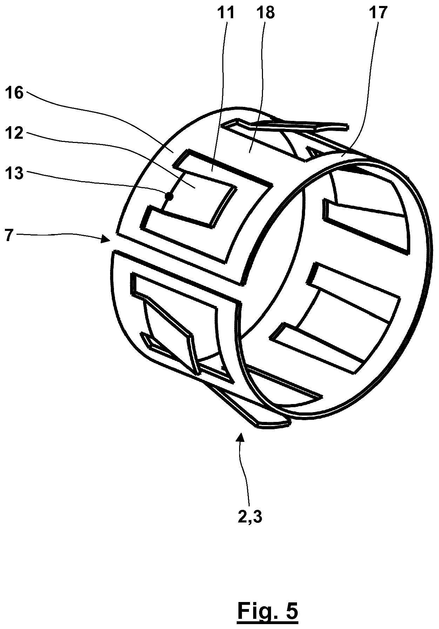

**Fig. 1 bis 5** zeigen eine erste Ausführungsform eines Anschlusssteckers 1. Der Anschlussstecker 1 ist gebildet mit einem als Sicherungsring 2 ausgebildeten Sicherungselement 3, einem Außenteil 4 und einem Innenteil 5, welche koaxial zu einer gemeinsamen Längs- und Montage- und Demontageachse 6 montiert sind.

Der Sicherungsring 2 besitzt einen Schlitz 7, so dass der Sicherungsring 2 unter Vergrößerung seines Durchmessers elastisch aufgeweitet werden kann. Unter elastischer Aufweitung des Sicherungsrings 2 kann in diesen das Außenteil 4 eingebracht werden in die montierte Stellung gemäß Fig. 1, in welcher der Sicherungsring 2 gefangen ist in einer Umfangsnut 8 des Außenteils 4 zwischen die Umfangsnut 8 begrenzenden Vorsprünge oder Bunden 9, 10. Der Sicherungsring 2 besitzt im Wesentlichen gleichförmig über den Umfang verteilte U-förmige Einschnitte oder Ausschnitte 11, durch welche Federzungen 12 gebildet sind. Ohne Beaufschlagung stehen die Federzungen 12 radial nach außen aus der weiteren Umfangsfläche des Sicherungsrings 2 hervor, was für das hier dargestellte Ausführungsbeispiel infolge einer Abwinklung 13 der Federzungen 12 der Fall ist. Infolge der Abwinklung 13 bildet die Federzunge 12 einen überstumpfen Winkel 14 gegenüber einer Einführrichtung 15. Der Sicherungsring 2 ist mit endseitigen geschlitzten Ringen 16, 17, diese axial verbindenden Streben 18 und den Federzungen 12, welche von dem in Einführrichtung 15 liegenden Ring auskragen, gebildet.

Das Außenteil 4 besitzt beidseits der Umfangsnut 8 zur Aufnahme des Sicherungsrings 2 zylindrische Außenflächen 19, 20, welche jeweils über eine umlaufende Nut 21, 22 für die Aufnahme eines Dichtelements 23, 24 verfügen. Hierbei ist der Durchmesser der in Montagerichtung 15 liegenden Außenfläche 19 kleiner als der der Außenfläche 20. In den äußeren Endbereichen ist das Außenteil 4 mit Schrägflächen 25, 26 ausgestattet.

Das Außenteil 4 verfügt über eine koaxial zur Längsachse 6 orientierte durchgehende Ausnehmung 27, welche wie folgt abgestuft ist:

In dem in Einführrichtung 15 liegenden Endbereich besitzt die Ausnehmung 27 eine zylindrische Bohrung 28, deren Durchmesser dem Innendurchmesser der Leitung 29 entspricht. In Entnahmerichtung 30 geht die Bohrung 28 über einen Absatz 31 über in eine zylindrische Bohrung 32, deren Durchmesser eine Übergangs- oder Spielpassung bildet mit der Mantelfläche der Leitung 29. In Entnahmerichtung 30 geht die Bohrung 32 über einen hier abgerundeten Übergangsbereich 33 über in einen Aufnahmeraum, an dessen zylindrischer Innenfläche 34 ein Dichtelement 35 abgestützt ist. Das Dichtelement 35 ist radial zwischen der äußeren Mantelfläche der Leitung 29 und der Innenfläche 34 verspannt. An die Innenfläche 34 schließt in Entnahmerichtung 30 ein Rastelement 36 an, welches hier gleichzeitig ein Beaufschlagungselement 37 bildet. Für das dargestellte Ausführungsbeispiel ist das Rast- und Beaufschlagungselement 36, 37 mit einem umlaufenden radial nach innen orientierten Vorsprung 38 gebildet, welcher zwei entgegengesetzt zueinander geneigte Rast- und Beaufschlagungsflächen 39, 40 ausbildet. In dem in Entnahmerichtung 30 angeordneten Endbereich schließt an das Rast- und Beaufschlagungselement 36, 37 ein weiterer Aufnahmeraum an, an dessen zylindrischer Innenfläche 41 ein weiteres Dichtelement 42 abgestützt ist.

Das Innenteil 5 verfügt über eine durchgehende Ausnehmung 43 mit einer zylindrischen Innenfläche 44, deren Durchmesser eine Spiel- oder Übergangspassung mit der Mantelfläche der Leitung 29 ausbildet. In dem in Einführrichtung 15 liegenden Endbereich bildet das Innenteil 5 Federarme 45 aus, deren in Einführrichtung 15 liegende Endbereiche
- radial innenliegend ein Halteelement 46, dessen Innendurchmesser kleiner ist als der Außendurchmesser der Mantelfläche der Leitung 29, und
- radial außenliegend ein Gegen-Rastelement 47 sowie Gegen-Beaufschlagungselement 48, welche hier integral ausgebildet sind und deren Außendurchmesser größer ist als der Innendurchmesser des Rast- und Beaufschlagungselements 36, 37
ausbilden. Hierbei sind das Gegen-Rastelement 47 und das Gegen-Beaufschlagungselement 48 mit Rast- und Beaufschlagungsflächen 49, 50 ausgestattet, deren Neigungswinkel vorzugsweise den Neigungswinkeln der Rast-und Beaufschlagungsflächen 39, 40 entsprechen. Für das dargestellte Ausführungsbeispiel sind mehrere Federarme 45 mit zugeordneten Halteelementen 46 und Gegen-Rastelement 47 und Gegen-Beaufschlagungselement 48 in Umfangsrichtung gleichmäßig verteilt und durch Schlitze 51 voneinander getrennt, so dass diese separat elastisch verformt werden können. In Entnahmerichtung 30 schließt an die Federarme 45 ein Ringkörper mit zylindrischer Außenfläche 52 an, in welcher eine Umfangsnut 53 zur Aufnahme des Dichtelements 42 vorgesehen ist. Der Außendurchmesser der Außenfläche 52 bildet eine Spiel- oder Übergangspassung aus mit der Innenfläche 41 des Außenteils 4. In dem in Entnahmerichtung 30 orientierten Endbereich verfügt das Innenteil über einen umlaufenden Bund 54, welcher in montiertem Zustand aus dem Außenteil 4 heraussteht.

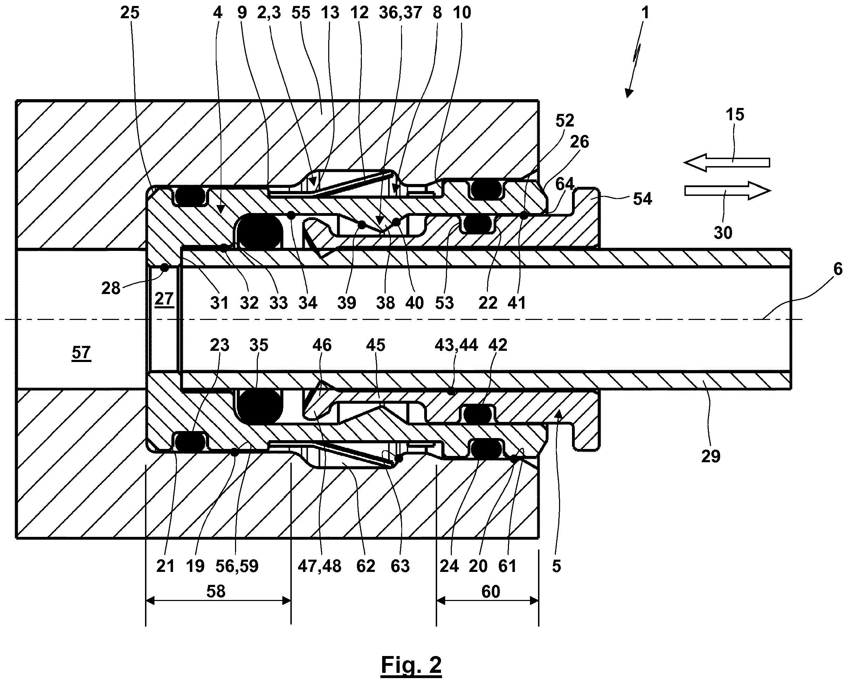

**Fig. 2** zeigt ein Gehäuse 55 eines pneumatischen Bauelements, an welches mittels des Anschlusssteckers 1 die Leitung 29 angeschlossen ist. Das Gehäuse 55 bildet einen Anschluss 56 aus, welcher in eine von dem Gehäuse 55 ausgebildete Leitung 57 mündet, deren Durchmesser vorzugsweise größer ist als der Innendurchmesser der Leitung 29. Der Anschluss 56 verfügt in dem in Einführrichtung 15 liegenden Endbereich über einen Axialabschnitt 58 mit zylindrischer Innenfläche 59, in welcher mit einer Spiel- oder Übergangspassung die Außenfläche 19 des Außenteils 4 aufgenommen ist mit Verpressung des Dichtelements 23 zwischen dem Außenteil 4 und dem Gehäuse 55. In dem in Entnahmerichtung 30 liegenden Endbereich verfügt der Anschluss 56 über einen Axialabschnitt 60 mit einer zylindrischen Innenfläche 61, deren Durchmesser größer ist als der Durchmesser der Innenfläche 59 und in der mit einer Spiel- oder Übergangspassung die Außenfläche 20 des Außenteils 4 aufgenommen ist, wobei zwischen dem Außenteil 4 und dem Gehäuse 55 das Dichtelement 24 verpresst wird. Zwischen den Axialabschnitten 58, 60 bildet der Anschluss 56 eine hier in Umfangsrichtung umlaufende Hinterschneidung 62 aus, welche in Entnahmerichtung begrenzt ist durch eine Rastfläche 63.

Für eine Montage wird zunächst der Anschlussstecker 1 mit der Leitung 29 montiert. Hierzu wird zunächst das Innenteil 5 auf die Leitung 29 aufgeschoben, bis sich die Leitung 29 durch das Innenteil 5 hindurcherstreckt und die Stirnseite der Leitung 29 in einem Abstand entsprechend Fig. 2 von dem Innenteil 5 befindet. Da während dieses Aufschiebens die federnde Bewegung der Federarme 45 des Innenteils 5 nicht behindert ist, können die Federarme 45 frei nach außen auffedern, wenn die Halteelemente 46 in Wechselwirkung mit der Mantelfläche der Leitung 29 treten.

Hieran anschließend wird als eine Baueinheit das Innenteil 5 mit darin angeordneter Leitung in das Außenteil 4 eingeführt. Hierbei tritt einerseits der frei aus dem Innenteil 5 auskragende Endbereich der Leitung 29 durch das Dichtelement 35 hindurch und in die Bohrung 32 des Außenteils 4 ein. Andererseits tritt das Gegen-Beaufschlagungselement 48 mit Eintritt in den das Außenteil 4 in Wechselwirkung mit einer eingangsseitigen Schrägfläche 64 des Außenteils 4, so dass mit weiterem Eintritt des Beaufschlagungselements 48 in das Außenteil 4 das Beaufschlagungselement 48 und damit das Halteelement 46 radial nach innen gepresst werden. Das Halteelement 46 ist mit einer Art Schneide ausgebildet, welche zur Folge hat, dass mit zunehmender gleitender Bewegung des Beaufschlagungselements 48 entlang der Schrägfläche 64 das Halteelement 46 in die Mantelfläche der Leitung 29 eingeformt wird. Befindet sich das Beaufschlagungselement 48 im Bereich der zylindrischen Innenfläche 41, kann das Innenteil 5 ohne weitere Erhöhung der radialen Verpressung des Halteelements 46 mit der Leitung 29 weiter in das Außenteil 4 eintreten. Hieran anschließend kommt das Beaufschlagungselement 48 in Wirkverbindung mit der Beaufschlagungsfläche 40 des Beaufschlagungselements 37, was ein weiteres Einpressen des Halteelements 46 in die Mantelfläche der Leitung 29 zur Folge hat. Nach entsprechender plastischer Verformung der Leitung 29 ist eine formschlüssige Verbindung zwischen Halteelement 46 und Leitung 29 gebildet. Mit weiterem Eintritt des Innenteils 5 mit darin angeordneter Leitung 29 gelangt schließlich das Beaufschlagungselement 48 in den Bereich der Innenfläche 34 abseits des Beaufschlagungselements 37, womit die Beaufschlagung des Halteelements 46 radial nach innen beseitigt wird. Dennoch bleibt der Formschluss zwischen Halteelement 46 und der Leitung 29 erhalten.

Für derart montierte Leitung 29 mit Innenteil 5 und Außenteil 4 erfolgt dann das Einsetzen in den Anschluss 56 des Gehäuses 55. Während der Einführbewegung in Einführrichtung 15 gleiten die Federzungen 12 mit ihren freien Endbereichen entlang der Innenfläche 61 des Anschlusses 56, wobei mit Eintritt der Federzungen 12 in den Anschluss 56 der Winkel 14 weiter vergrößert wird infolge der Biegebeanspruchung der Federzungen 12 infolge der in dem freien Endbereich wirkenden Kontaktkraft. Eine zwischen dem kontaktierenden Endbereich der Federzungen 12 und dem Anschluss 56 wirkende Reibkraft beansprucht die Federzunge 12 auf Zug. Mit hinreichendem Eintritt in den Anschluss 56 schnappen die Federzungen 2 in die Hinterschneidung 62, wobei die Endbereiche der Federzungen an der die Hinterschneidung 62 begrenzenden Rastfläche 63 anliegen. In dem derart montierten Zustand ist die Leitung 29 über einen großen Axialbereich in dem Anschlussstecker geführt, nämlich einerseits im Bereich der Bohrung 32 des Außenteils 4 und andererseits im Bereich der Innenfläche 44 des Innenteils 5. Eine Abdichtung gegenüber einem Austritt von Fluid zwischen Leitung 29, Außenteil 4 und Innenteil 5 erfolgt über die beiden verpressten Dichtelemente 35, 42. Ergänzend erfolgt eine Abdichtung zwischen Außenteil 4 und Gehäuse 55 über die weiteren Dichtelemente 23, 24.

Werden im Betrieb Kräfte in Entnahmerichtung 30 auf die Leitung 29 aufgebracht, kann eine geringe Bewegung der Leitung 29 mit formschlüssig damit verbundenem Innenteil 5 für den erfindungsgemäßen Anschlussstecker 1 toleriert werden. Nach einer derartigen geringfügigen Bewegung in Entnahmerichtung 30 kommt aber das Beaufschlagungselement 48 des Innenteils 5 zur Anlage an die Beaufschlagungsfläche 39 des Beaufschlagungselements 37 des Außenteils 4, womit eine Bewegung des Halteelements 46 nach außen, welche für die Lösung des Formschlusses zwischen Halteelement 46 und Leitung 29 erforderlich wäre, blockiert ist. Jedwede weitere Bewegung von Leitung 29 mit Innenteil 5 würde eine Gleitbewegung des Gegen-Beaufschlagungselements 48 entlang der Beaufschlagungsfläche 39 des Beaufschlagungselements 37 zur Folge haben, womit die Einpressung des Halteelements 46 in die Mantelfläche der Leitung 29 erhöht würde mit einer Stärkung des Formschlusses, womit die Sicherungswirkung vergrößert wird. Eine hiermit auch zunehmend auf das Außenteil 4 übertragene in Entnahmerichtung wirkende Kraft wird über die Abstützung der Federzungen 12 an den Rastflächen 63 abgestützt, womit die Federzungen 12 zunehmend mit Druckbeanspruchung oder Beanspruchung auf Knickung zwischen der Rastfläche 63 und dem Vorsprung oder Bund 9 verspannt werden. Im Extremfall kann die Entnahme des Außenteils 4 aus der Hinterschneidung 62 des Gehäuses 55 nur unter Zerstörung der Federzungen 12 oder plastischer Verformung der Rastfläche 63 erfolgen.

Soll hingegen die Leitung 29 gezielt entnommen werden, kann der Monteur das Innenteil 5 über den Bund 54 in das Innere des Außenteils 4 drücken, so dass das Gegen-Beaufschlagungselement 48 nicht in Wirkverbindung mit dem Beaufschlagungselement 37, hier der Beaufschlagungsfläche 39 tritt. Wird gleichzeitig eine Zugkraft auf die Leitung 29 in der Entnahmerichtung 30 ausgebildet, kann das Gegen-Beaufschlagungselement 48 abseits der Beaufschlagungsfläche 39 radial nach außen elastisch verformt werden, womit das Halteelement 46 aus der plastischen Einformung in die Mantelfläche der Leitung 29 austreten kann und somit die Leitung 29 aus dem Innenteil 5 herausgezogen werden kann.

Für eine alternative Montagemöglichkeit wird zunächst das Innenteil 5 in das Außenteil 4 eingesetzt. Hieran anschließend wird die Leitung 29 in das Innenteil 5 und das Außenteil 4 eingeschoben, wobei für diese einschiebende Bewegung automatisch das Gegen-Beaufschlagungselement 48 von der Beaufschlagungsfläche 39 des Beaufschlagungselements 37 weg gedrückt wird, so dass das Halteelement 46 unter elastischer Beaufschlagung des Federarms 45 radial nach außen federn kann und eine leitende Bewegung zwischen Halteelement 46 und Leitung 29 möglich ist.

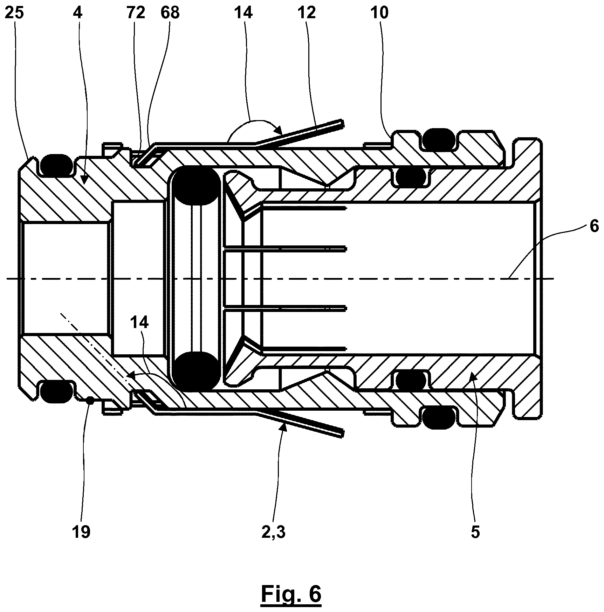

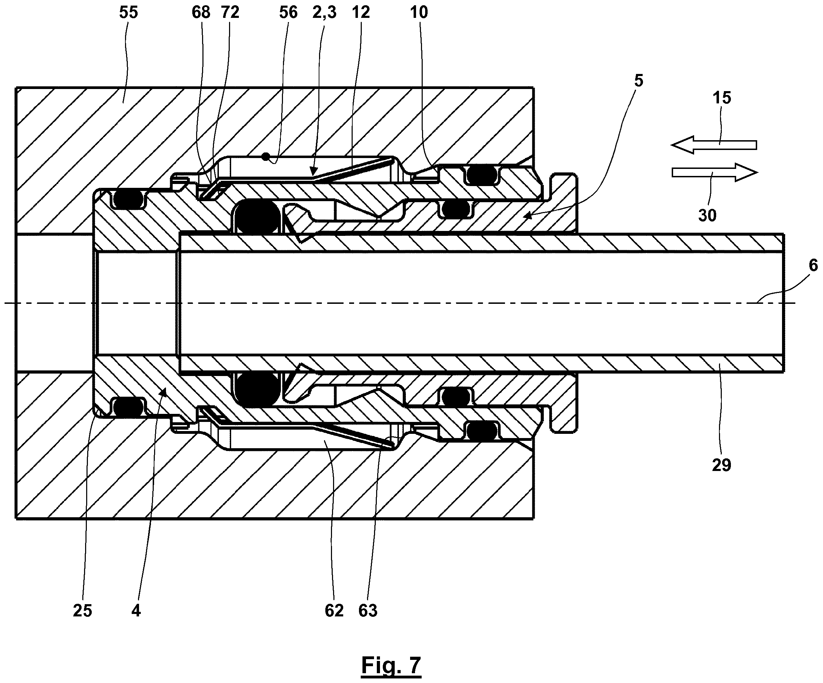

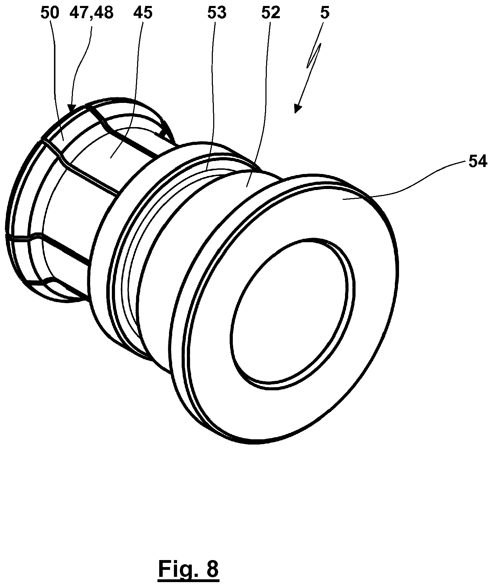

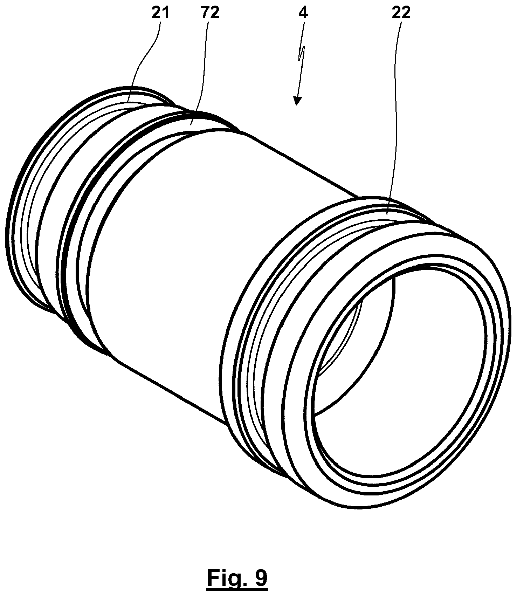

Für ein abgewandeltes Ausführungsbeispiel gemäß **Fig. 6 bis 10** sind die Bauelemente hinsichtlich der Wechselwirkung zwischen Außenteil 4 und Innenteil 5 und zwischen Außenteil 4 sowie Innenteil 5 und Leitung 29 entsprechend dem Ausführungsbeispiel gemäß Fig. 1 bis 5 ausgebildet. Abweichend ist hier aber das als Sicherungsring 2 ausgebildete Sicherungselement 3 ausgebildet, was Anpassungen einerseits der Mantelfläche des Außenteils 4 und andererseits des Anschlusses 56 nach sich zieht:

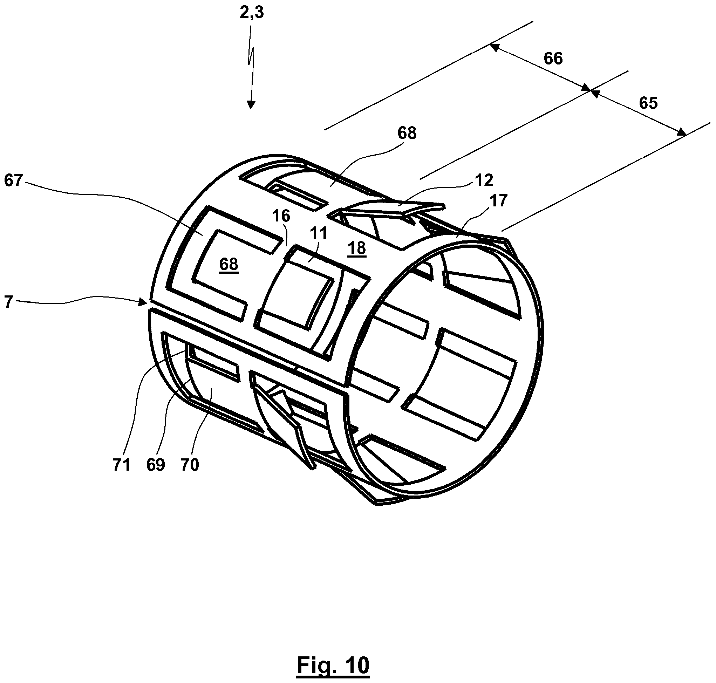

Gemäß **Fig. 10** besitzt der Sicherungsring 2 zwei aneinander anschließende Axialabschnitte 65, 66. Hierbei ist der Axialabschnitt 65 grundsätzlich entsprechend dem Sicherungsring 2 gemäß den Fig. 1 bis 5 ausgebildet mit hiervon bereitgestellten Federzungen 12 für eine Rastierung mit Hinterschneidungen 62 des Gehäuses 55. Auch in dem Axialabschnitt 66 verfügt der Sicherungsring 2 über U-förmige Ein- oder Ausschnitte 67 zur Bereitstellung weiterer Federzungen 68. Hierbei sind die Ein- oder Ausschnitte 11, 67 mit koaxialen Seitenschenkeln des U, aber voneinander abgewandten Grundschenkeln des U in den Sicherungsring 2 eingebracht. Somit erstrecken sich die Federzungen 12, 68 von dem mittigen Ring 16 auskragend in entgegengesetzte Richtungen. Die Federzungen 68 besitzen ebenfalls Abwinklungen 69, im Bereich welcher die Federzungen 68 von einem sich parallel zur Längsachse 6 erstreckenden Teilbereich 70 in einen radial nach innen abgewinkelten Teilbereich 71 übergehen. Für diese Ausführungsform ist der Sicherungsring 2 nicht zwischen den Vorsprüngen oder Bunde 9, 10 an dem Außenteil 4 gefangen. Vielmehr liegt der Sicherungsring 2 einseitig an einem Vorsprung oder Bund 10 an, während zur Abstützung in die andere Richtung der abgewinkelte Teilbereich 71 der Federzungen 68 eingerastet ist in eine Rastnut 72 des Außenteils 4. Hierbei ist die Rastnut 72 vorzugsweise in Einführrichtung 15 begrenzt durch eine Querfläche und in Entnahmerichtung 30 begrenzt durch eine Schrägfläche, deren Neigungswinkel der Neigung des abgewinkelten Teilbereichs 71 entspricht. Ist eine hinreichende Verformbarkeit des Sicherungsrings 2 gegeben, kann der Sicherungsring 2 optional auch ohne Schlitz 7 ausgebildet sein.

Für den Anschlussstecker 1 gemäß Fig. 6 bis 10 ist grundsätzlich auch eine Montage möglich, wie diese beschrieben worden ist für das Ausführungsbeispiel gemäß Fig. 1 bis 5.

Zusätzlich ist aber eine weitere vorteilhafte Montage wie folgt möglich: Möglich ist, dass der Sicherungsring 2 zunächst allein in den Anschluss 56 des Gehäuses 55 eingesetzt wird. Hieran anschließend kann das Außenteil 4, ggf. mit darin angeordnetem Innenteil 5 und wiederum darin angeordneter Leitung 29, in den Anschluss 56 und in den darin angeordneten Sicherungsring 2 eingesetzt werden. Mit diesem Einsetzen in den Sicherungsring 2 kontaktiert der freie Endbereich der Federzunge 68 eine Schrägfläche 25 des Außenteils 4, womit die Beaufschlagung der Federzungen 68 radial nach außen erfolgt. Mit dem weiteren Einführen des Außenteils 4 in den Anschluss 56 gleitet die Federzunge 68 entlang der Außenfläche 19 des Außenteils 4, bis die Federzunge 68 in die Rastnut 72 einrastet. In diesem Fall ist der Sicherungsring 2 gefangen einerseits mit dem Endbereich der Federzungen 12 an der Rastfläche 63 des Anschlusses 56 und andererseits mit den Endbereichen der Federzungen 68 an der die Rastnut 72 begrenzenden Querfläche. Eine Aufbringung einer Entnahmekraft für zu einer Beanspruchung beider Federzungen 12, 68 auf Druck oder Knickung, womit eine hohe Sicherungswirkung herbeigeführt werden kann.

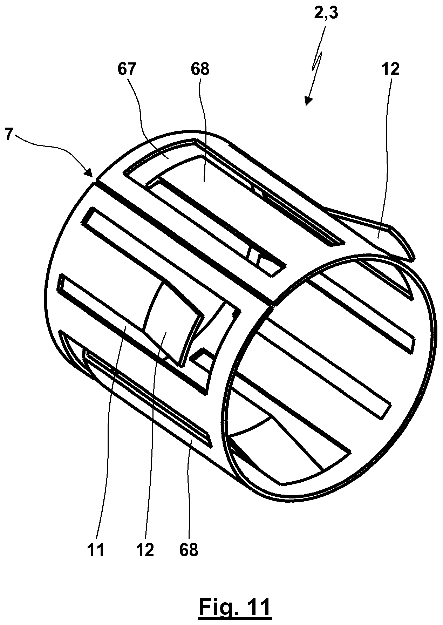

Fig. 11 zeigt eine alternative Ausgestaltung eines Sicherungsrings 2, bei welchem die unterschiedlichen Federzungen 12, 68 nicht in unterschiedlichen Axialabschnitten 65, 66 und somit nicht axial hintereinanderliegend angeordnet sind. Vielmehr sind hier in Umfangsrichtung alternierend die Federzungen 12, 68 durch entgegengesetzt orientierte U-förmige Einschnitte oder Ausschnitte 11, 67 ausgebildet, wobei auch hier die Federzungen 12, 68 jeweils in entgegengesetzte Richtung orientiert sind. Ohne erforderliche Anpassungen des Anschlusses 56 des Gehäuses und des Außenteils 4, des Innenteils 5 und der Leitung 29 kann eine Montage erfolgen, wie dies für das Ausführungsbeispiel gemäß Fig. 6 bis 10 beschrieben worden ist.

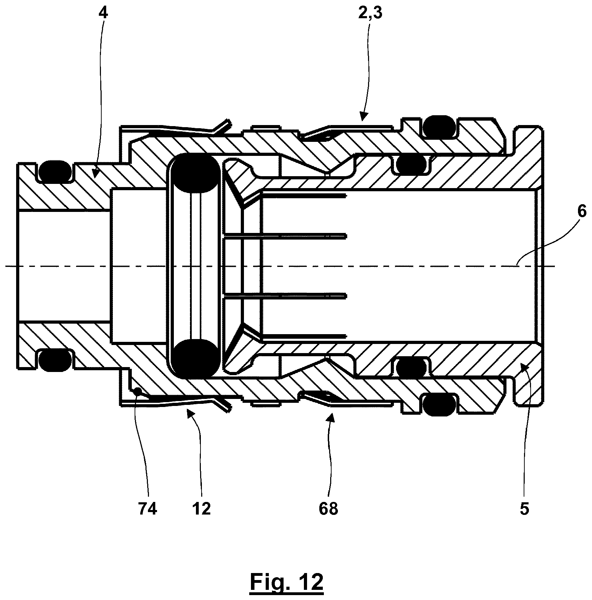

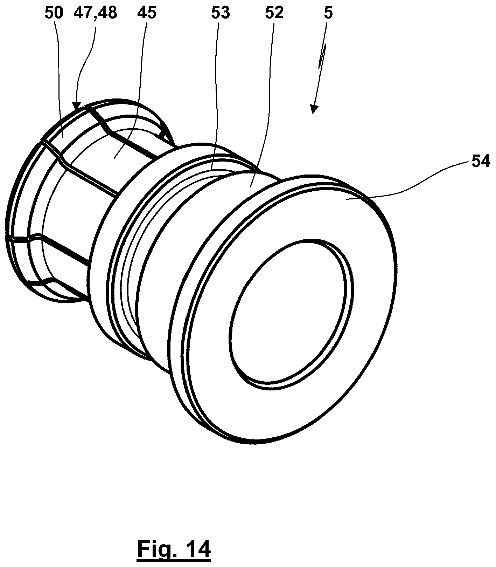

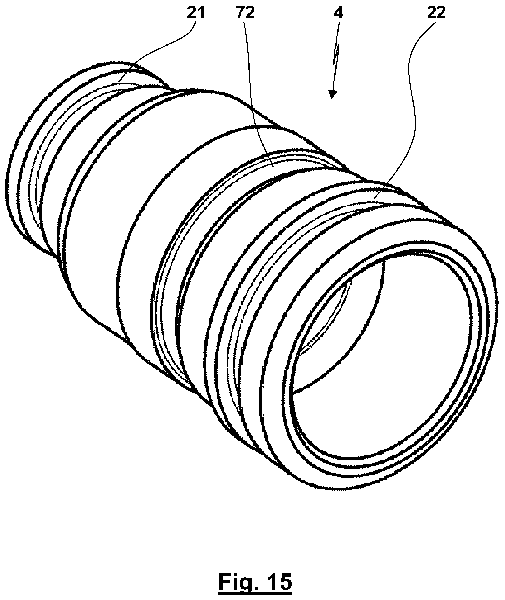

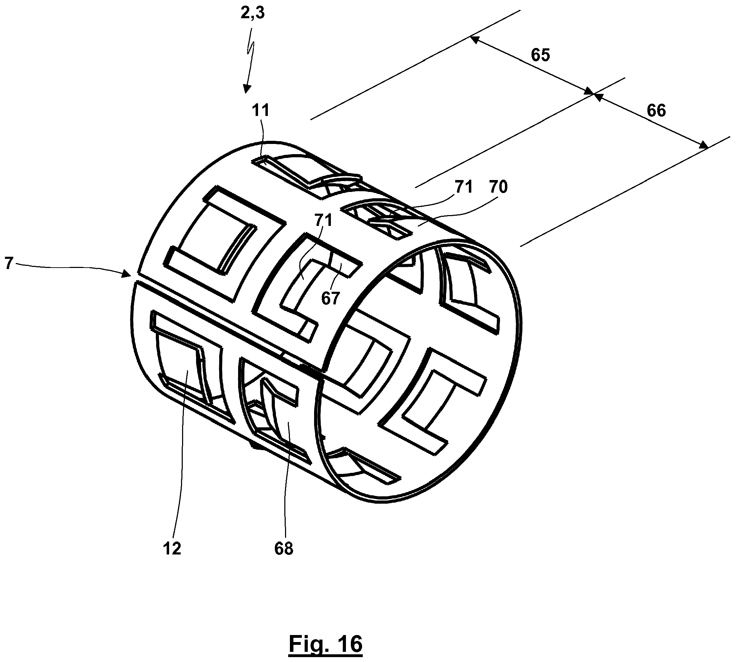

Auch für die weitere, in **Fig. 12 bis 16** dargestellte Ausführungsform entspricht die Gestaltung des Außenteils 4, des Innenteils 5 und der Leitung 29 bis auf die Mantelfläche des Außenteils 4 und den Anschluss 56 im Wesentlichen den vorangegangenen Ausführungsbeispielen. Allerdings ist hier der Sicherungsring 2 gemäß Fig. 16 mit unterschiedlichen Axialabschnitten 65, 66 gebildet, wobei in dem in Einführrichtung liegenden Axialabschnitt 65 die Federzungen 12 ausgebildet sind, während in dem in Entnahmerichtung 30 angeordneten Axialabschnitt 66 die Federzungen 68 angeordnet sind. Auch hier sind die Grundschenkel der U-förmigen Einschnitte 11, 67 koaxial zueinander orientiert, während hier aber die Grundschenkel des U der Einschnitte oder Ausschnitte 11, 67 einander zugewandt sind. Somit erstrecken sich die Federzungen 12, 68 jeweils von dem zugeordneten Endbereich des Sicherungsrings 2 aufeinander zu. Die Federzungen 68 sind hierbei radial nach innen abgewinkelt, während die Federzungen 12 radial nach außen abgewinkelt sind. Grundsätzlich entsprechend dem Ausführungsbeispiel gemäß Fig. 6 bis 10 findet der abgewinkelte Teilbereich 71 der Federzunge 68 Aufnahme in einer Rastnut 72 des Außenteils 4, wobei in diesem Fall die Rastnut 72 weiter in Entnahmerichtung an der Mantelfläche des Außenteils 4 vorgesehen ist. Auch hier werden die Federzungen 12, 68 bei der Applikation einer Entnahmekraft jeweils auf Druck oder Knickung beansprucht.

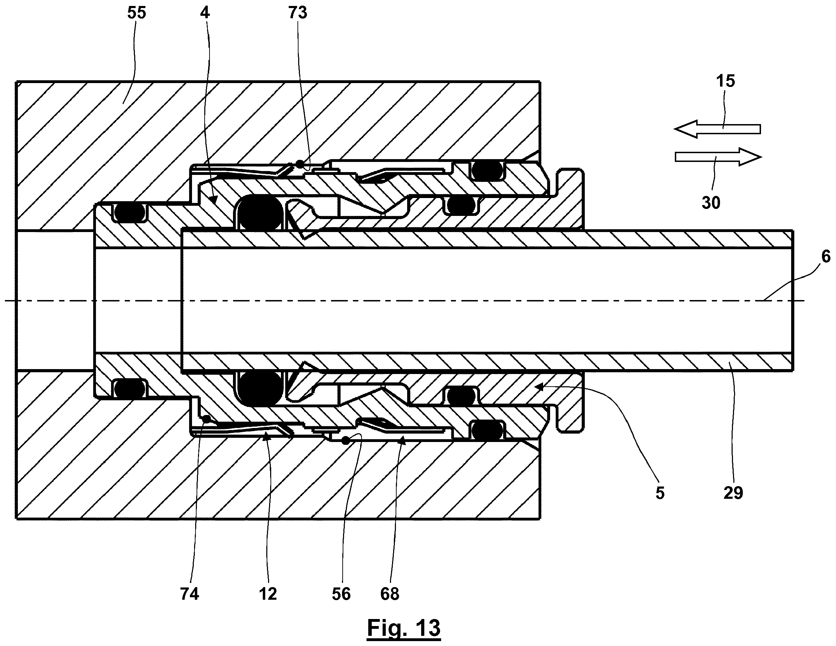

Wie in **Fig. 13** zu erkennen ist, verfügt in diesem Fall der Anschuss 56 des Gehäuses 55 nicht über eine Hinterschneidung 62, was dessen Fertigung signifikant vereinfacht. Vielmehr liegt in montiertem Zustand der freie Endbereich der Federzunge 12 an einer zylindrischen Fixierfläche 73 des Anschlusses 56 an.

Die Montage und Wirkungsweise des Anschlusssteckers 1 gemäß Fig. 12 bis 16 ist wie folgt:
Zunächst wird allein der Sicherungsring 2 in den Anschluss 56 des Gehäuses 55 eingesetzt. Mit dem Einsetzen werden die Federzungen 12 radial nach innen elastisch verformt, womit dann der Sicherungsring 2 entlang der Innenfläche des Anschlusses 56 gleiten kann mit Ausbildung eines Gleit- und Reibkontakts zwischen dem freien Endbereich der Federzungen 12 mit der Innenfläche des Anschlusses 56. Da keinerlei Abstützung der Federzungen 12 gewährleistet ist, ist die Anpresskraft zwischen den Endbereichen der Federzungen 12 an die Innenfläche des Anschlusses 56 gering, so dass ein leichtes Einschieben des Sicherungsrings 2 möglich ist und keine Beschädigung der Innenfläche des Anschlusses 56 mit plastischer Verformung, Einbringen von Riefen u. ä. erfolgt. Befindet sich der Sicherungsring 2 in seiner Endlage, in welcher der innenliegende Endbereich des Sicherungsrings 2 an einem Absatz des Anschlusses 56 des Gehäuses 55 anliegt, wird als nächstes das Außenteil 4, ggf. mit darin angeordnetem Innenteil 5 und wiederum darin angeordneter Leitung 29, in den Anschluss 56 und in den darin angeordneten Sicherungsring 2 eingesetzt. Das Außenteil 4 verfügt in diesem Fall über eine Beaufschlagungsschräge 74, welche zur Anlage an die Federzunge 12 kommt. Mit zunehmendem Eintritt des Außenteils 4 in den Anschluss 56 beaufschlagt die Beaufschlagungsschräge 74 zunehmend die Federzunge 12 radial nach außen. Dies hat zur Folge, dass der unter Umständen scharfkantige Endbereich der Federzunge 12 in die Fixierfläche 73 des Anschlusses 56 eingeformt wird, womit ein Formschluss herbeigeführt ist. Mit weiterem Einschieben des Außenteils 4 in den Anschluss 56 erfolgt ein weiteres Einpressen, wobei in der in Fig. 13 dargestellten Endstellung des Außenteils 4 in dem Anschluss 56 der Freiheitsgrad der Federzunge 12 für eine Bewegung radial nach innen durch die Mantelfläche des Außenteils 4 blockiert ist. Somit basiert diese Ausführungsform einerseits auf einer Erhöhung der Beaufschlagung der Federzunge 12 radial nach außen mit damit einhergehendem Einpressen des Endbereichs der Federzunge 12 in den Anschluss 56 und andererseits auf der Blockade des Freiheitsgrads der Federzunge 12 radial nach innen durch die Mantelfläche des Außenteils 4.

In der in Fig. 13 dargestellten montierten Stellung ist der Sicherungsring 2 gefangen einerseits durch die plastische Abstützung der Federzunge 12 in Entnahmerichtung 30 an dem Anschluss 56 des Gehäuses 55 und andererseits durch das Anliegen des freien Endbereichs der Federzunge 68 an einer Querfläche der Rastnut 72 des Außenteils 4. Somit kann das Außenteil 4 nicht ohne Weiteres, insbesondere ohne plastische Verformung des Anschlusses 56, des Sicherungsrings 2 und/oder des Außenteils 4 im Bereich der Rastnut 72 aus dem Anschluss 56 entnommen werden.

### BEZUGSZEICHENLISTE

- 1: Anschlussstecker
- 2: Sicherungsring
- 3: Sicherungselement
- 4: Außenteil
- 5: Innenteil
- 6: Längs- und Montageachse
- 7: Schlitz
- 8: Umfangsnut
- 9: Vorsprung, Bund
- 10: Vorsprung, Bund
- 11: Einschnitt, Ausschnitt
- 12: Federzunge
- 13: Abwinklung
- 14: Winkel
- 15: Einführrichtung
- 16: Ring
- 17: Ring
- 18: Steg
- 19: Außenfläche
- 20: Außenfläche
- 21: Nut
- 22: Nut
- 23: Dichtelement
- 24: Dichtelement
- 25: Schrägfläche
- 26: Schrägfläche
- 27: Ausnehmung
- 28: Bohrung
- 29: Leitung
- 30: Entnahmerichtung
- 31: Absatz
- 32: Bohrung
- 33: Übergangsbereich
- 34: Innenfläche
- 35: Dichtelement
- 36: Rastelement
- 37: Beaufschlagungselement
- 38: Vorsprung
- 39: Rast- und Beaufschlagungsfläche
- 40: Rast- und Beaufschlagungsfläche
- 41: Innenfläche
- 42: Dichtelement
- 43: Ausnehmung
- 44: Innenfläche
- 45: Federarm
- 46: Halteelement
- 47: Gegen-Rastelement
- 48: Gegen-Beaufschlagungselement
- 49: Rast- und Beaufschlagungsfläche
- 50: Rast- und Beaufschlagungsfläche
- 51: Schlitz
- 52: Außenfläche
- 53: Umfangsnut
- 54: Bund
- 55: Gehäuse
- 56: Anschluss
- 57: Leitung
- 58: Axialabschnitt
- 59: Innenfläche
- 60: Axialabschnitt
- 61: Innenfläche
- 62: Hinterschneidung
- 63: Rastfläche
- 64: Schrägfläche
- 65: Axialabschnitt
- 66: Axialabschnitt
- 67: Einschnitt, Ausschnitt
- 68: Federzunge
- 69: Abwinklung
- 70: Teilbereich
- 71: Teilbereich
- 72: Rastnut
- 73: Fixierfläche
- 74: Beaufschlagungsschräge

## Patentansprüche

1. Fluidischer Anschlussstecker (1) zum fluiddichten Verbinden einer rohr- oder schlauchartigen Leitung (29) mit einem Anschluss (56), insbesondere für eine Druckluftanlage eines Nutzfahrzeugs,
a) mit einem Innenteil (5), welches eine durchgehende Ausnehmung (43) besitzt, in welcher die Leitung (29) aufgenommen ist, wobei das Innenteil (5) ein Halteelement (46) besitzt, welches die Leitung (29) in dem Innenteil (5) sichert, und
b) mit einem Außenteil (4), in welchem das Innenteil (5) aufgenommen ist und welches in den Anschluss (56) einsetzbar ist,
c) wobei eine radiale Beaufschlagung des Halteelements (46) des Innenteils (5) über ein Beaufschlagungselement (37) des Außenteils (4) erfolgt, womit ein Verstärkung der Sicherung der Leitung (29) in dem Innenteil (5) erfolgt,
d) mit einem Sicherungselement (3), welches das Außenteil (4) in einem in den Anschluss (56) eingesetzten Zustand bei auf die Leitung (29) wirkenden Zugkräften mit einer Sicherungskraft gegenüber einer Entnahme aus dem Anschluss (56) sichert,
**dadurch gekennzeichnet, dass**
e) das Sicherungselement (3) und/oder das Sicherungselement (3) mit dem Außenteil (4) mit einer Einführkraft in den Anschluss (56) einsetzbar ist, welche mindestens eine Größenordnung kleiner ist als die maximale Sicherungskraft gegenüber einer Entnahme aus dem Anschluss (56), wobei
fa) das Sicherungselement (3) mit dem Anschluss (56) eine Rastverbindung ausbildet und das Sicherungselement (3) mit mindestens einer radial nachgiebigen Federzunge (12; 68) ausgebildet ist und eine Federzunge (12) gegenüber der Einführrichtung mit einem überstumpfen Winkel (14) geneigt ist, der Anschluss (56) eine Hinterschneidung (62) besitzt, eine Rastverbindung mit dem Eintritt der Federzunge (12) in die Hinterschneidung (62) gebildet ist, während des Einführens des Sicherungselements (3) in den Anschluss (56) vor Eintritt der Federzunge (12) in die Hinterschneidung (62) die Federzunge (12) auf Biegung und/oder infolge einer Reibkraft zwischen der Federzunge (12) und dem Anschluss (56) auf Zug beansprucht ist und bei auf die Leitung (29) wirkenden Zugkräften die Federzunge (12) mit einer Stirnseite gegen eine von der Hinterschneidung (62) ausgebildete Rastfläche (63) gepresst wird, womit die Federzunge (12) mit einer Druckkraft beansprucht wird, oder
fb) das Sicherungselement (3) mit mindestens einer radial nachgiebigen Federzunge (12; 68) ausgebildet ist und ein Freiheitsgrad der Federzunge (12) radial nach innen, welcher während des Einführens des Sicherungselements (3) in den Anschluss (56) nutzbar ist, durch das Außenteil (4) in montiertem Zustand zumindest eingeschränkt ist oder die Federzunge (12) durch das Außenteil (4) radial nach außen beaufschlagt wird oder
fc) das Sicherungselement mit mindestens einer radial nachgiebigen Federzunge (12; 68) ausgebildet ist und mit dem Anschluss eine Rastverbindung ausbildet und durch Gestaltung der Rastschrägen, Wahl der Länge und des Querschnittes eines Federarms eines Rastelements der Rastverbindung und Wahl der Steifigkeit eines Federarms des Rastelements das Verhalten beim Einrasten und andererseits die Sicherungswirkung gegenüber einem Lösen der Rastverbindung konstruktiv vorgegeben werden.

2. Fluidischer Anschlussstecker (1) nach Anspruch 1, **dadurch gekennzeichnet, dass** das Sicherungselement (3) als Sicherungsring (2) ausgebildet ist.

3. Fluidischer Anschlussstecker (1) nach einem der vorhergehenden Ansprüche, **dadurch gekennzeichnet, dass** das Außenteil (4) ein Rastelement (36) besitzt, welches mit einem Gegen-Rastelement (47) des Innenteils (5) rastierbar ist zur axialen Sicherung des Außenteils (4) relativ zum Innenteil (5).

4. Fluidischer Anschlussstecker (1) nach Anspruch 3, **dadurch gekennzeichnet, dass** das Rastelement (36) des Außenteils (4) das Beaufschlagungselement (37) bildet, welches das Halteelement (46) zur Verstärkung der Sicherung der Leitung (29) in dem Innenteil (5) beaufschlagt.

5. Fluidischer Anschlussstecker (1) nach einem der vorhergehenden Ansprüche, **dadurch gekennzeichnet, dass** das Außenteil (4) ein Dichtelement (23, 24) besitzt, welches eine fluiddichte Abdichtung des Außenteils (4) gegenüber dem Anschluss (56) gewährleistet.

6. Fluidischer Anschlussstecker (1) nach einem der vorhergehenden Ansprüche, **dadurch gekennzeichnet, dass**
a) das Innenteil (5) und das Außenteil (4) über Ausnehmungen (32, 43) mit korrespondierenden Durchmessern verfügen und
b) sich die Leitung (29) durch die Ausnehmung (44) des Innenteils (5) hindurch bis in die Ausnehmung (32) des Außenteils (4) erstreckt.

7. Fluidischer Anschlussstecker (1) nach Anspruch 6, **dadurch gekennzeichnet, dass**
a) das oder ein Dichtelement (35) axial zwischen der Ausnehmung (32) des Außenteils (4) und der Ausnehmung (44) des Innenteils (5) angeordnet ist und
b) das von dem Außenteil (4) getragene Dichtelement (35) unmittelbar zwischen dem Außenteil (4) und der Leitung (29) wirkt.

8. Verfahren zur Nutzung eines fluidischen Anschlusssteckers (1) nach einem der vorhergehenden Ansprüche, **gekennzeichnet dadurch, dass**
a) der Anschlussstecker (1) in montiertem Zustand des Sicherungselements (3), des Außenteils (4) und des Innenteils (5) mit darin angeordneter Leitung (29) in den Anschluss (56) eingesetzt wird,
b) wobei mit dem Einsetzen des Anschlusssteckers (1) in den Anschluss (56) das Sicherungselement (3) mit einer oder der Hinterschneidung (62) des Anschlusses (56) verrastet wird.

9. Verfahren zur Nutzung eines fluidischen Anschlusssteckers (1) nach einem der Ansprüche 1 bis 7, **gekennzeichnet dadurch, dass**
a) zunächst das Sicherungselement (3) in den Anschluss (56) eingesetzt wird, wobei mit dem Einsetzen des Sicherungselements (3) die Federzunge (12) radial nach innen verformt wird, und
b) dann das Außenteil (4) in den Anschluss (56) eingesetzt wird, womit ein Freiheitsgrad der Federzunge (12) radial nach innen zumindest eingeschränkt wird oder womit die Federzunge (12) durch das Außenteil (4) radial nach außen beaufschlagt wird.

10. Verfahren nach Anspruch 8 oder 9, **gekennzeichnet dadurch, dass**
a) wobei bei der Aufbringung von Entnahmekräften eine radiale Beaufschlagung des Halteelements (46) über ein Beaufschlagungselement (37) des Außenteils (4) erfolgt, womit eine Verstärkung der Sicherung der Leitung (29) in dem Innenteil (5) erfolgt und
b) wobei für eine erleichterte Entnahme der Leitung (29) aus dem Innenteil (5) ein axiales Fixieren oder Hereindrücken des Innenteils (5) in das Außenteil (4) erforderlich ist, womit dann keine Beaufschlagung des Halteelements (46) durch das Beaufschlagungselement (37) erfolgt.

## Claims

1. Fluidic connector plug (1) for establishing a fluid-tight connection of a pipe-like, tube-like or hose-like conduit (29) to a port (56), especially for a compressed-air system of a commercial vehicle,
a) with an inner part (5) comprising a recess (43) passing through the inner part (5), in which the conduit (29) is accommodated, where the inner part (5) comprises a holding element (46) which secures the conduit (29) in the inner part (5) and
b) with an outer part (4) in which the inner part (5) is accommodated and which is insertable into the port (56),
c) where a radial bias of the holding element (46) of the inner part (5) is achieved via a biasing element (37) of the outer part (4), in which way the conduit (29) is more strongly secured in the inner part (5),
d) with a securing element (3) which in a state inserted into the port (56) and when pulling forces are effective onto the conduit (29) secures the outer part (4) with a securing force from being removed from the port (56),
**characterised in that**
e) the securing element (3) and/or the securing element (3) with the outer part (4) is insertable into the port (56) with an insertion force which is smaller by at least one magnitude than the maximum securing force with respect to removal from the port (56), where
fa) the securing element (3) forms a latching connection with the port (56) and the securing element (3) is realised with at least one radially yielding flexible tongue (12; 68) and a or one flexible tongue (12) is inclined with respect to the direction of insertion under a reflex angle (14), the port (56) comprises a back taper (62), a latching connection being formed when inserting the flexible tongue (12) into the back taper (62), during the insertion of the securing element (3) into the port (56) and before the flexible tongue (12) enters into the back taper (62) the flexible tongue (12) being subjected to bending stress and/or being subjected to tensile stress due to a frictional force between the flexible tongue (12) and the port (56) and when tensile forces are effective onto the conduit (29) the flexible tongue (12) with a front face is pressed against a latching surface (63) formed by the back taper (62), in which way the flexible tongue (12) is subjected to compressive force, or
fb) the securing element (3) is realised with at least one radially yielding flexible tongue (12; 68) and a degree of freedom of the yielding flexible tongue (12) radially inwards, which is usable during insertion of the securing element (3) into the port (56), is at least limited by the outer part (4) in the mounted state or the flexible tongue (12) is biased radially outwardly by the outer part (4) or
fc) the securing element is realised with at least one radially yielding flexible tongue (12; 68) and forms a latching connection with the port and by the design of the latching declines, choice of the length and the cross section of a spring arm of a latching element of the latching connection and choice of the rigidity of a spring arm of the latching element the behaviour during latching and on the other hand the securing effect with respect to releasing the latching connection are constructively defined.

2. Fluidic connector plug (1) according to claim 1, **characterised in that** the securing element (3) is embodied as a securing ring (2).

3. Fluidic connector plug (1) according to one of the preceding claims, **characterised in that** the outer part (4) comprises a latching element (36) which can be made to interact in a latching way with a counter latching element (47) of the inner part (5) in order to secure the outer part (4) axially relative to the inner part (5).

4. Fluidic connector plug (1) according to claim 3, **characterised in that** the latching element (36) of the outer part (4) forms the biasing element (37) which biases the holding element (46) in order to secure the conduit (29) more strongly in the inner part (5).

5. Fluidic connector plug (1) according to one the preceding claims, **characterised in that** the outer part (4) comprises a sealing element (23, 24) which ensures fluid-tight sealing of the outer part (4) with respect to the port (56).

6. Fluidic connector plug (1) according to one of the preceding claims, **characterised in that**
a) the inner part (5) and the outer (4) comprise recesses (32, 43) with corresponding cross sections and
b) the conduit (29) extends through the recess (44) of the inner part (5) into the recess (32) of the outer part (4).

7. Fluidic connector plug (1) according to claim 6, **characterised in that**
a) the or a sealing element (35) is arranged axially between the recess (32) of the outer part (4) and the recess (44) of the inner part (5) and
b) the sealing element (35) held by the outer part (4) is effective directly between the outer part (4) and the conduit (29).

8. Method of using a fluidic connector plug (1) according to one of the preceding claims, **characterised in that**
a) the connector part (1) is inserted into the port (56) in the mounted state of the securing element (3), the outer part (4) and the inner part (5) with the conduit (29) arranged within,
b) where when the connecting plug (1) is inserted into the port (56) the securing element (3) is latched to an or the back taper (62) of the port (56).

9. Method of using a fluidic connector plug (1) according to one of claims 1 to 7, **characterised in that**
a) at first the securing element (3) is inserted into the port (56), where when the securing element (3) is inserted the flexible tongue (12) is deformed radially inwards, and
b) then the outer part (4) is inserted into the port (56), in which way a degree of freedom of the flexible tongue (12) radially inwardly is limited or in which way the flexible tongue (12) is biased radially outwardly by the outer part (4).

10. Method according to claim 8 or 9, **characterised in that**
a) where, when removal forces are applied, a radial biasing of the holding element (46) is achieved via a biasing element (37) of the outer part (4), in which way the conduit (29) is more strongly secured in the inner part (5) and
b) where for an easier removal of the conduit (29) from the inner part (5) an axial fixation or pressing of the inner part (5) into the outer part (4) is necessary, in which way there is no biasing of the holding element (46) by the biasing element (37).

## Revendications

1. Connecteur de raccordement fluidique (1) pour liaison étanche aux fluides d'une conduite tubulaire ou en forme de tuyau (29) avec un raccord (56), plus particulièrement pour une installation d'air comprimé d'un véhicule utilitaire,
a) avec une partie interne (5) qui comprend un évidement traversant (43), dans lequel la conduite (29) est logée, la partie interne (5) comprenant un élément de maintien (46), qui fixe la conduite (29) dans la partie interne (5) et
b) avec une partie externe (4) dans laquelle la partie interne (5) est logée et qui peut être insérée dans le raccord (56),
c) une sollicitation radiale de l'élément de maintien (46) de la partie interne (5) ayant lieu par l'intermédiaire d'un élément de sollicitation (37) de la partie externe (4), ce qui provoque un renforcement de la fixation de la conduite (29) dans la partie interne (5),
d) avec un élément de fixation (3) qui fixe la partie externe (4) dans un état inséré dans le raccord (56), dans le cas de forces de traction agissant sur la conduite (29), avec une force de fixation contre un retrait hors du raccord (56),
**caractérisé en ce que**
e) l'élément de fixation (3) et/ou l'élément de fixation (3) avec la partie externe (4) peut être inséré dans le raccord (56) avec une force d'introduction qui est inférieure d'au moins un ordre de grandeur à la force de fixation maximale contre le retrait hors du raccord (56),
fa) l'élément de fixation (3) formant, avec le raccord (56), une liaison par encliquetage et l'élément de fixation (3) étant formé avec au moins une languette élastique flexible radialement (12; 68) et une languette élastique (12) étant inclinée par rapport à la direction d'introduction avec un angle sur-obtus (14), le raccord (56) comprenant une contre-dépouille (62), une liaison par encliquetage étant formée avec l'entrée de la languette élastique (12) dans la contre-dépouille (62), la languette élastique (12) étant sollicitée en flexion et/ou en traction à la suite d'une force de friction entre la languette élastique (12) et le raccord (56), pendant l'introduction de l'élément de fixation (3) dans le raccord (56), avant l'entrée de la languette élastique (12) dans la contre-dépouille (62) et, lors de forces de traction agissant sur la conduite (29), la languette élastique (12) étant comprimée, avec une face frontale, contre une surface d'encliquetage (63) formée par la contre-dépouille (62), ce qui permet de solliciter la languette élastique (12) avec une force de compression ou
fb) l'élément de fixation (3) est formé avec au moins une languette élastique flexible radialement (12; 68) et un degré de liberté de la languette élastique (12) radialement vers l'intérieur, qui peut être utilisé pendant l'introduction de l'élément de fixation (3) dans le raccord (56), est au moins limitée par la partie externe (4) dans l'état monté ou la languette élastique (12) est sollicitée radialement vers l'extérieur par la partie externe (4) ou
fc) l'élément de fixation est formé avec au moins une languette élastique flexible radialement (12; 68) et forme, avec le raccord une liaison par encliquetage et par la formation des chanfreins d'encliquetage, le choix de la longueur et de la section transversale d'un bras élastique d'un élément d'encliquetage de la liaison d'encliquetage et le choix de la rigidité d'un bras élastique de l'élément d'encliquetage, le comportement lors de l'encliquetage et d'autre part l'action de fixation par rapport à un détachement de la liaison par encliquetage peut être prédéterminée par la construction.

2. Connecteur de raccordement fluidique (1) selon la revendication 1, **caractérisé en ce que** l'élément de fixation (3) est conçu comme une bague de fixation (2).

3. Connecteur de raccordement fluidique (1) selon l'une des revendications précédentes, **caractérisé en ce que** la partie externe (4) comprend un élément d'encliquetage (36) qui peut être encliqueté avec un contre-élément d'encliquetage (47) de la partie interne (5) pour la fixation axiale de la partie externe (4) par rapport à la partie interne (5).

4. Connecteur de raccordement fluidique (1) selon la revendication 3, **caractérisé en ce que** l'élément d'encliquetage (36) de la partie externe (4) forme l'élément de sollicitation (37), qui sollicité l'élément de maintien (46) pour le renforcement de la fixation de la conduite (29) dans la partie interne (5).

5. Connecteur de raccordement fluidique (1) selon l'une des revendications précédentes, **caractérisé en ce que** la partie externe (4) comprend un élément d'étanchéité (23, 24) qui assure une étanchéification contre les fluides de la partie externe (4) par rapport au raccord (56).

6. Connecteur de raccordement fluidique (1) selon l'une des revendications précédentes, **caractérisé en ce que**
a) la partie interne (5) et la partie externe (4) disposent d'évidements (32, 43) avec des diamètres correspondants et
b) la conduite (29) s'étend à travers l'évidement (44) de la partie interne (5) jusque dans l'évidement (32) de la partie externe (4).

7. Connecteur de raccordement fluidique (1) selon la revendication 6, **caractérisé en ce que**
a) le ou un élément d'étanchéité (35) est disposé axialement entre l'évidement (32) de la partie externe (4) et l'évidement (44) de la partie interne (5) et
b) l'élément d'étanchéité (35) supporté par la partie externe (4) agit directement entre la partie externe (4) et la conduite (29).

8. Procédé d'utilisation d'un connecteur de raccordement fluidique (1) selon l'une des revendications précédentes, **caractérisé en ce que**
a) le connecteur de raccordement (1) est inséré, dans l'état monté de l'élément de fixation (3), de la partie externe (4) et de la partie interne (5), avec la conduite (29) disposée à l'intérieur, dans le raccord (56),
b) l'insertion du connecteur de raccordement (1) dans le raccord (56) permettant d'encliqueter l'élément de fixation (3) avec une ou la contre-dépouille (62) du raccord (56).

9. Procédé d'utilisation d'un connecteur de raccordement fluidique (1) selon l'une des revendications 1 à 7, **caractérisé en ce que**
a) l'élément de fixation (3) est d'abord inséré dans le raccord (56), l'insertion de l'élément de fixation (3) déformant la languette élastique (12) radialement vers l'intérieur et
b) la partie externe (4) étant alors insérée dans le raccord (56), ce qui au moins limite un degré de liberté de la languette élastique (12) radialement vers l'intérieur ou ce qui fait en sorte que la partie externe (4) sollicite la languette élastique (12) radialement vers l'extérieur.

10. Procédé selon la revendication 8 ou 9, **caractérisé en ce que**
a) lors de l'application de forces de retrait, une sollicitation radiale de l'élément de maintien (46) a lieu par l'intermédiaire d'un élément de sollicitation (37) de la partie externe (4), ce qui permet un renforcement de la fixation de la conduite (29) dans la partie interne (5) et
b) pour faciliter un retrait de la conduite (29) hors de la partie interne (5), une fixation axiale ou un enfoncement de la partie interne (5) dans la partie externe (4) est nécessaire, ce qui permet qu'aucune sollicitation de l'élément de maintien (46) par l'élément de sollicitation (37) n'ait alors lieu.
